(19) Europäisches Patentamt
European Patent Office
Office européen des brevets

(11) Publication number : **0 522 923 A2**

(12) # EUROPEAN PATENT APPLICATION

(21) Application number : **92401845.0**

(51) Int. Cl.[5] : **C08G 63/672,** C08G 63/91

(22) Date of filing : **29.06.92**

(30) Priority : **29.06.91 KR 1099391**

(43) Date of publication of application :
**13.01.93 Bulletin 93/02**

(84) Designated Contracting States :
**DE FR GB IT**

(71) Applicant : **CHEIL SYNTHETICS INC.**
**1, Chungsan-Dong**
**Kyungsan-city, Kyungsang buk-Do (KR)**

(72) Inventor : **Kim, Kwang Tae**
**Hanbo Meedo Apartment 101-707, 452, Daechi-Dong**
**Kangnam-Ku, Seoul (KR)**
Inventor : **Ihm, Dae Woo**
**Sangah Apartment 3-907, 165 Ohgeum-Dong, Songa-Ku, Seoul (KR)**
Inventor : **Baek,Moon Soo**
**1662-7 Sinlim-Dong,**
**Kwanak-Ku, Seoul (KR)**
Inventor : **Lee, Young Choon**
**Jugong 3 cha Apartment 347-104, Banpo-Dong,**
**Seocho-Ku, Seoul (KR)**

(74) Representative : **Portal, Gérard et al**
**Cabinet Beau de Loménie 55, rue d'Amsterdam**
**F-75008 Paris (FR)**

(54) **Polyetherester elastomers and a method for their preparation.**

(57) New polyether-ester elastomers and a method for their preparation are described.
The method comprises adding a phenol alkali metal salt and a cross-linking agent selected from a primary amine, a secondary amine or a mixture thereof to a polyether-ester elastomer amine or a mixture thereof to a polyether-ester elastomer solution produced by a copolymerization of short chain ester units of the formula (I) and long chain ether units of the formula (II)

$$-\overset{\overset{\displaystyle O}{\|}}{C}-R-\overset{\overset{\displaystyle O}{\|}}{C}-O-D-O- \qquad (I)$$

$$-\overset{\overset{\displaystyle O}{\|}}{C}-R-\overset{\overset{\displaystyle O}{\|}}{C}-O-G-O- \qquad (II)$$

wherein R is a biradical obtained by removing carboxyl group from a dicarboxylic acid having a molecular weight not more than 400, D is a biradical obtained by removing hydroxyl group from a short chain diol having a molecular weight not more than 250, and G is a biradical obtained by removing hydroxyl group from a long chain ether glycol having a molecular weight of a range of about 400 to 4,000.

EP 0 522 923 A2

Jouve, 18, rue Saint-Denis, 75001 PARIS

## BACKGROUND OF THE INVENTION

### Field of the Invention

The present invention relates to new polyether-ester elastomers having high cure rate, good melt viscosity and other excellent properties suitable for extrusion and blow moldings and to a method for their preparation.

### Description of the Prior Art

As known to those skilled in the art, thermoplastic polyether-ester elastomers are block copolymers wherein rubber-like polyether soft segments and plastic polyester hard segments are alternately linked to one another, so that they typically have excellent rubber-like properties such as low-temperature durability, flexibility, elastic recovery (elasticity) and etc., each caused by the soft segments, and excellent plastic properties such as mechanical strength, heat resistance, low-temperature resistance, moldability and the like, each caused by the hard segments. Such polyether-ester elastomers are thus useful for (flexible) hoses, belts, industrial elements, sport articles and etc..

However, it is known that these polyether-ester elastomers are not suited to a blow molding due to their low melt strength, furthermore, in case of high content of soft segments they have serious disadvantages in moldability caused by low cure rate thereof.

To solve the above problems, there have been proposed several methods for improving the melt strength and the cure rate of the polyether-ester elastomer, for example, blending of butadiene/acrylonitrile, that is, nitrile rubber (NBR), a class of nitrile copolymers, with the elastomers, and addition of ethylene/methacrylic acid ionomer, a class of polymerized carboxylate, to the elastomers. However, these methods have a disadvantage in that they cause occurrence of a phase separation in the elastomers during the molding process, while they efficiently improve the melt strength of the elastomers. In addition, aliphatic alkali salts may be added to the elastomers to make them have improved melt strength and cure rate. However, this method is not preferred for practical use since it detrimentally affects the melt stability of the elastomers.

In another method, crosslinking of the elastomer may be achieved using primary amine or secondary amine as a crosslinking agent, thus improving the melt strength of the elastomers. However, this method shows a disadvantage in that it causes a problem in moldability of the elastomer because it reduces the cure rate of the elastomer.

Therefore, the present inventors,conducted a series of experiments and found that if the polyether-ester elastomers are mixed with a phenol alkali metal salt and a cross-linking agent, a primary amine, a secondary amine or a mixture thereof, the surprisingly improved melt viscosity is shown in the result elastomers as well as improved cure rate. The present invention is predicated on the above finding.

## SUMMARY OF THE INVENTION

An object of this invention is to provide a method for preparation of polyether-ester elastomer having high cure rate, good melt viscosity and excellent properties suitable for extrusion and blow moldings.

In accordance with this invention, a method for preparation of a polyether-ester elastomer which comprises adding a phenol alkali metal salt and a cross-linking agent selected from a primary amine, a secondary amine or a mixture thereof to a polyether-ester elastomer solution produced by a copolymerization of short chain ester units of the formula (I) and long chain ether units of the formula (II)

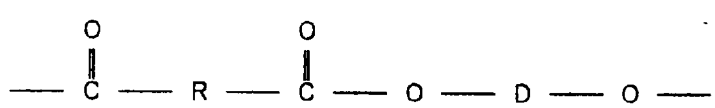

(I)

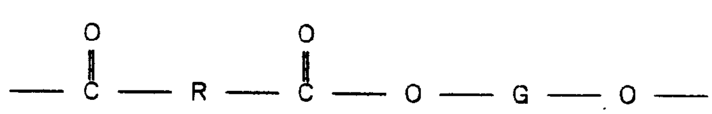

(II)

wherein R is a biradical obtained by removing carboxyl group from a dicarboxylic acid having a molecular weight not more than 400, D is a biradical obtained by removing hydroxyl group from a short chain diol having a molecular weight not more than 250, and G is a biradical obtained by removing hydroxyl group from a long chain ether glycol having a molecular weight of a range of about 400 to 4,000.

**Another object of the invention is the new polether-ester elastomers notably obtainable by the above method.**

DETAILED DESCRIPTION OF PREFERRED ENBODIMENTS

The polyether-ester elastomer according to the present invention comprises about 10 to 75% by weight of long chain ether units and about 25 to 90% by weight of short chain ester units. Here, the polyester comprises a dibasic acid and a short chain diol while the polyether comprises a dibasic acid and an aliphatic polyglycol. The dibasic acid is selected from a group comprising terephthalic acid, isophthalic acid, naphthalene dicarboxylic acid, adipic acid and sebacic acid. The short chain diol is a low molecular weight diol (having a molecular weight less than 250) having about 2 to 15 carbon atoms, for example, ethylene glycol, propylene glycol, 1,4-butane diol, pentamethylene glycol, decamethylene glycol, 1,6-hexane diol, cyclohexane dimethanol and the like. On the other hand, the aliphatic polyglycol is selected from polyethylene glycol, polyisopropylene glycol, polytetramethylene glycol and etc., and this polyglycol typically has a molecular weigh of a range of about 400 to 4,000 and about 0.02 to 0.3 mole of polyglycol is added to 1 mole of dicarboxylic acid.

The polyether-ester elastomer according to this invention has the formulas (I) and (II)

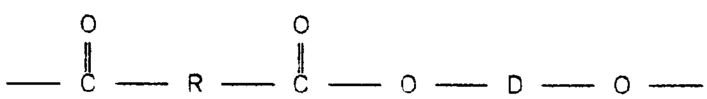

(I)

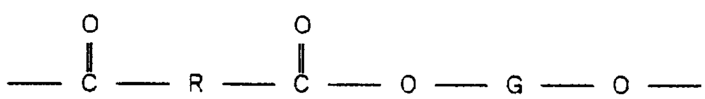

(II)

The formula (I) is of the short chain ester hard segment for providing the final elastomer with good mechanical properties, while the formula (II) is of the long chain ether soft segment for providing the final elastomer with good elasticity and flexibility. In the formulas (I) and (II), R is a residual biradical obtained by removing carboxyl group from the dicarboxylic acid having a molecular weight not more than 400, D is a residual biradical obtained by removing hydroxyl group from the short chain diol having a molecular weight not more than 250, and G is a residual biradical obtained by removing hydroxyl group from the long chain ether glycol having a molecular weight of a range of about 400 to 4,000.

As aforementioned, the method of this invention provides the polyether-ester elastomer which is suitable for the extrusion and blow moldings because of its increased cure rate and improved melt viscosity. In this method, phenol alkali metal salt and a cross-linking agent, primary or secondary amine, are added to the polyether-ester elastomer solution.

The phenol alkali metal salt is an alkali metal salt bonded to phenols having at least one hydroxyl group. The alkali metal salt has the formula (III)

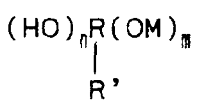

(III)

wherein R is an aromatic compound such as benzene, naphthalene, anthracene and phenanthrene or an aromatic compound directly bonded to a benzene ring. At this time, m and n are an integer from 0 to 5, respectively, and the sum thereof is not more than 5. R′ is a substituent, having alkyl, aryl and halogen groups, obtained by substituting the hydrogen atom or hydrogen group of R by others. M is alkali metals such as sodium, potassium and etc.. The representative phenol compound is ortho-cresol, meta-cresol, parachlorophenol, para-phenylphenol, para-cyclohexylphenol, hydroquinone catechol, resorcinol, pyrogallol, alpha-naphthol, beta-naphthol or the like.

In addition, monohydric phenol generally causes environmental pollution so that polyhydric phenol is used in this invention. On the other hand, the phenol compound shows effective result when it has a concentration of about 0.05 to 10% by weight of the polyether-ester elastomer.

The primary or secondary amine, the cross-linking agent, is 4,4'-bis(α,α-dimethylbenzyl)-diphenylamine, diethanolamine, dimethanolamine, hexamethylene bis(iminoacetic acid)tri (hydroxymethyl)aminomethane or etc., and it is shown that the secondary amine is more effective than the primary amine. The adding amount of the cross-linking agent is preferably about 0.1 to 15% by weight of the polyether-ester elastomer. In addition, the addition time of the cross-linking agent is determined in consideration of reactivity, reaction rate, variation of color tone and occurrence of phase separation of the elastomer while it is more effective to add the cross-linking agent to the elastomer when the amount of the methanol coming from the reaction of short chain ester units of formula (I) with long chain ether units of formula (II) which is distilled out exceeds 70% by weight of theoretical amount during transesterification of the preparing process.

On the other hand, the catalyst is selected from organic titanate, organic magnesium salt and the like, especially tetrabutyl titanate, magnesium acetate or a mixture thereof in this invention. It is more effective to determine the catalyst amount of about 0.001 to 2.0% by weight of the polyether-ester elastomer.

The following examples and comparative examples are merely intended to the illustrate the present invention is further detail and should by no means be considered to be limitative of the invention.

EXAMPLE 1

An ether-ester copolymer was prepared by the following process. That is, a flask equipped with a distillation column and a stainless steel stirrer provided with a paddle having the shape of the same length as the inner radius of the flask and rotatably disposed at a position of 3 mm above the flask bottom was charged with the following start materials:

dimethylterephthalate -------------- 100 weight parts (hereinafter, the weight part being referred to simply as "part")

1,4- butanediol -------------- 75 parts

polytetramethylene glycol --------- 108 parts (having average molecular weight of 1,000)

tetrabutyl titanate -------------- 0.8 part (prepared as a slurry type mixed with 1,4-buthanediol)

magnesium acetate -------------- 0.4 part.

The inner temperature of the flask was slowly raised from 150 °C to 200 °C for one hour, then the extraction amount of methanol was measured. When the amount of the methanol distilled out 70% by weight of the theoretical amount, a stabilizer and a catalyst were added to the flask, and a phenol alkali metal salt and primary or secondary amine of slurry type mixed with 1,4-buthanediol were added to the flask, thereafter, the flask was heated to 210 °C. At this time, the addition and heating were preferably carried out within about 20 minutes, otherwise the reaction after methanol had been distilled out 70% by weight of the theoretical amount was continued for a substantially longer than a predetermined reaction time so that there was generated a lot of gas in the reaction flask, thereby detrimentally affected the final elastomer. Thereafter, the flask was again charged with the following materials:

tetrabutyl titanate ------------------ 0.4 part

(prepared as a slurry type mixed with 1,4-buthanediol)

2,6-ditert-butyl-4-methylphenol ------- 0.4 part

(antithermaloxidant)

2-(2-hydrogen-benzotriazol-2-yl)-4-methyl-6-dodecylphenol

(light stabilizer) --------------- 0.8 part

diethanolamine ------------------ 0.8 part

disodium hydroquinone --------------- 0.5 part.

After transesterification, the inner temperature of the reaction flask was slowly raised to 250 °C and the inner pressure of the flask is slowly reduced to be less than or equal to 1 mmHg. When the desired degree of polymerization was achieved, the reaction was stopped. The result product of the reaction was measured the melt index using a melt indexer and was measured the melt temperature (Tm) and the crystallization temperature (Tc) using a differential scanning calorimeter, then measured the cure rate by subtracting the measured crystallization temperature from the measured melt temperature, that is, Tm-Tc. The results, melt indices, the melt temperature and the crystallization temperature, are shown in Table 1.

EXAMPLE 2

The procedure of Example 1 was repeated, substituting dipotassium hydroquinone as a phenol alkali metal salt for the disodium hydroquinone. The results are shown in Table 1.
dipotassium hydroquinone 0.5 part

EXAMPLE 3

The procedure of Example 1 was repeated, substituting disodium resorcinol as a phenol alkali metal salt for the disodium hydroquinone. The results are shown in Table 1.
disodium resorcinol 0.5 part

EXAMPLE 4

The procedure of Example 1 was repeated, substituting dipotassium resorcinol as a phenol alkali metal salt for the disodium hydroquinone. The results are shown in Table 1.
dipotassium resorcinol 0.5 part

EXAMPLE 5

The procedure of Example 1 was repeated, substituting 4,4'-bis(α,α-dimethylbenzyl)-diphenylamine for the primary or secondary amine. The results are shown in Table 1.

4,4'-bis(α,α-dimethylbenzyl)-diphenylamine ---0.8 part

EXAMPLE 6

The procedure of Example 1 was repeated, substituting ethanolamine for the primary or secondary amine. The results are shown in Table 1.
ethanolamine 0.8 part

COMPARATIVE EXAMPLE 1

The procedure of Example 1 was repeated, adding no phenol alkali metal salt and no cross-linking agent, the primary or secondary amine. The results are shown in Table 1.

COMPARATIVE EXAMPLE 2

The procedure of Example 1 was repeated, adding no crosslinking agent, the primary or secondary amine. The results are shown in Table 1.

COMPARATIVE EXAMPLE 3

The procedure of Example 1 was repeated, adding no phenol alkali metal salt. The results are shown in Table 1.

TABLE 1

| Section | Examples | | | | | | Com. Examples | | |
|---|---|---|---|---|---|---|---|---|---|
| | 1 | 2 | 3 | 4 | 5 | 6 | 1 | 2 | 3 |
| Index* | 0.35 | 0.40 | 0.18 | 0.20 | 0.26 | 0.42 | 13.2 | 6.3 | 4.9 |
| Index** | 1.95 | 2.12 | 1.3 | 1.50 | 1.95 | 2.83 | 17.6 | 9.8 | 7.8 |
| Tem.* | 200 | 201 | 199 | 203 | 202 | 200 | 201 | 203 | 199 |
| Tem.** | 168 | 170 | 172 | 168 | 170 | 169 | 160 | 165 | 163 |

Index* : Melt index (g/10 minutes), (230 °C/2.16 kg)
Index**: Melt index (g/10 minutes), (250 °C/2.16 kg)
Tem* : Melt temperature (°C)
Tem** : Crystallization temperature (°C)

It is apparent from Table 1 that improved melt index and cure rate are achieved when the phenol alkali metal salt and the cross-linking agent, primary or secondary amine, were added to the polyether-ester elastomer, and the sodium salt as the alkali metal salt and the secondary amine as the crosslinking agent were more effective than the potassium salt and the primary amine, respectively, because they caused the elastomer to have excellent properties.

## Claims

1. A method for preparation of a polyether-ester elastomer which comprises adding a phenol alkali metal salt and a cross-linking agent selected from a primary amine, a secondary amine or a mixture thereof to a polyether-ester elastomer solution produced by a copolymerization of short chain ester units of the formula (I) and long chain ether units of the formula (II)

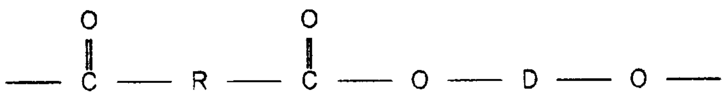 (I)

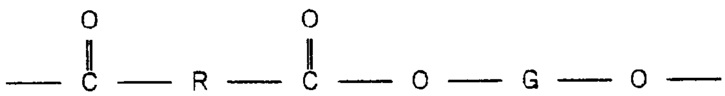 (II)

wherein R is a biradical obtained by removing carboxyl group from a dicarboxylic acid having a molecular weight not more than 400, D is a biradical obtained by removing hydroxyl group from a short chain diol having a molecular weight not more than 250, and G is a biradical obtained by removing hydroxyl group from a long chain ether glycol having a molecular weight of a range of about 400 to 4,000.

2. A method according to claim 1 wherein the phenol alcali metal salt and the cross-linking agent are added when the methanol distilled out is 70 % by weight of the theoretical amount and then the transesterification and the copolymerization are conducted to the desired degree of polymerization.

3. A method according to claim 1 or 2, wherein the long chain ether units amount to about 10 to 75% by weight of the polyether-ester elastomer.

4. A method according to one of claims 1 to 3, wherein the phenol alkali metal salt is an alkali metal salt of the formula (III)

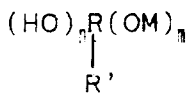 (III)

wherein R is an aromatic compound such as benzene, naphthalene, anthracene and phenanthrene or an aromatic compound directly bonded to a benzene ring, R′ is a substituent, having alkyl, aryl and halogen groups, obtained by substituting hydrogen of R by others, M is alkali metals such as sodium and potassium, m and n are an integer from 0 to 5, respectively, and the sum thereof is not more than 5.

5. A method according to one of claims 1 to 4 , wherein the phenol alkali metal salt amounts to about 0.05 to 10% by weight of the polyether-ester elastomer.

6. A method according to one of claims 1 to 5, wherein the primary or secondary amine, the cross-linking agent, is diethanolamine, 4,4′-bis(α, α-dimethylbenzyl)-diphenylamine, dimethanolamine, hexamethylene bis(iminoacetic acid)tri(hydroxymethyl)aminomethane.

7. A method according to one of claims 1 to 6, wherein the primary or secondary amine amounts to about 0.1 to 15% by weight of the polyether-ester elastomer.

8. A polyether-ester elastomer notably obtainable by the method of anyone of claims 1 to 7.